## Europäisches Patentamt

## European Patent Office

## Office européen des brevets

(19)

(11) Veröffentlichungsnummer : **0 368 079 B1**

(12) # EUROPÄISCHE PATENTSCHRIFT

(45) Veröffentlichungstag der Patentschrift :
25.03.92 Patentblatt 92/13

(51) Int. Cl.⁵ : **E03F 3/06, E21B 7/26,**
**E21B 7/20, E21B 7/28,**
**F16L 55/165**

(21) Anmeldenummer : **89119822.8**

(22) Anmeldetag : **25.10.89**

(54) **Gerät für das Zerstören von Rohrleitungen nach innen.**

(30) Priorität : **25.10.88 DE 3836228**

(43) Veröffentlichungstag der Anmeldung :
**16.05.90 Patentblatt 90/20**

(45) Bekanntmachung des Hinweises auf die
Patenterteilung :
**25.03.92 Patentblatt 92/13**

(84) Benannte Vertragsstaaten :
**AT BE CH DE FR GB IT LI NL**

(56) Entgegenhaltungen :
**EP-A- 0 086 567**
**DE-A- 3 620 026**

(73) Patentinhaber : **BGV GES.FÜR**
**VERFAHRENSTECHNIK M.B.H.**
**Stemwarder Landstrasse 13**
**W-2000 Barsbüttel (DE)**

(72) Erfinder : **Miegel, Wolfgang, Dipl.-Ing.**
**Lambert-Strus-Weg 15**
**W-2000 Hamburg 65 (DE)**

(74) Vertreter : **Schmidt-Bogatzky, Jürgen, Dr. Ing.**
**Huth, Dietrich & Partner et al**
**Warburgstrasse 50**
**W-2000 Hamburg 36 (DE)**

## Beschreibung

Die Erfindung betrifft ein Gerät für das Zerstören von Rohrleitungen nach innen, insbesondere für erdverlegte Ver- und Entsorgungsleitungen beliebiger Materialien und Abmessungen, wobei nach innen gerichtete Spaltkeile durch Kraftausübung perifer die alten Rohrleitungen zerstören, in deren unzerstörten Teil ein Leitkörper in Überlappung mit einem die zu zerstörende Rohrleitung übergreifenden Montagerohr vorauseilt. Es ist bekannt, Rohrleitungen zu zerstören und gleichzeitig neue Rohrleitungen an gleicher Stelle wieder einzubringen. Hierbei kann durch Krafteinwirkung die alte Rohrleitung nach außen (Burst-Lining-Gerät) oder nach innen gebrochen werden. Ein Gerät zum Brechen von Rohren nach außen ist durch die EP-A 0 086 567 bekannt. Bei diesem Gerät wird das im Boden verlegte Rohr aus z.B Beton oder Steinzeug mittels eines Aufweitkopfes zerstört und nach außen in das umgebende Erdreich gedrückt, so daß Platz für das neu zu verlegende Rohr entsteht. Rohrbruchstücke verbleiben nach dem Verlegevorgang im Erdreich, was aus Umweltschutzgründen unerwünscht ist. Im jahrelangen Gebrauch können Schutz- und insbesondere Giftstoffe in die Rohrwände eingedrungen sein, die bei Anwendung des bekannten Gerätes weiterhin im Boden verbleiben und aus den Rohrbruchstücken allmählich in das umgebende Erdreich abgegeben werden. Ferner können die im Boden verbliebenen Rohrbruchstücke punktuelle Belastungen des neuverlegten Rohres hervorrufen und so dessen Außenbereich beschädigen. Um diesen Nachteil zu vermeiden, ist es durch die DE-A 36 20 026 bekannt, das zu sanierende Rohr mittels eines Schürfkopfes zu zerfräsen und die entstehenden Rohrbruchstücke mittels einer Rohrschnecke abzutransportieren. Das hierzu verwendete Gerät ist konstruktiv aufwendig. Es besteht ferner die Gefahr, daß größere nach außen wegbrechende Rohrbruchstücke sich am Rohrschneckeneingang verklemmen und so zu einer Betriebsstörung führen. Bei einem weiteren Gerät der eingangs genannten Art, das nach einem nicht vorveröffentlichten Stand der Technik die alte Rohrleitungen nach innen zerstört, erfolgt die Krafteintragung von einer Baugrube aus, so daß die Spaltkeile nicht direkt am Krafteintragungsgerät befestigt sind. Das Kraftübertragungsgerät kann aus einer Bodenramme bestehen, die als Massivkörper ausgebildet ist. Dabei ist es allerdings nötig, daß die zu übertragende Kraft über ein gesondertes Stahlrohr mit großer Wanddicke an die Spaltkeile herangebracht wird. Zusätzlich tritt ein Energieverlust auf, da die Bodenramme mit dem Stahlrohr nicht fest verbunden ist.

Der Erfindung liegt die Aufgabe zugrunde, bei einem Gerät für das Zerstören von Rohrleitungen nach innen die Krafteintragung auf die Spaltkeile ohne Energieverlust bzw. mit zusätzlicher Energieausübung durchführen zu können.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Die mit der Erfindung erzielten Vorteile bestehen insbesondere darin, daß die Krafteintragung immer direkt erfolgt und damit auch wirtschaftlich größere Reichweiten als mit bereits bekannten Geräten, die Rohrleitungen nach innen verdrängen, erzielt werden können. Bei einer kurzen Baulänge des Gerätes können Aufgrabungen am Start- und Zielpunkt entfallen, soweit Revisionseinrichtungen zum Ein- und Ausbau des Gerätes vorhanden sind. Um die Spaltkraft der Spaltkeile zu erhöhen, können die Spaltkeile zusätzlich mit Preßluft dynamisch oder mittels Hydraulikstempel statisch vor- und zurückbewegt werden.

Die Erfindung wird im folgenden anhand der in den Zeichnungen dargestellten Ausführungsformen erfindungsgemäßer Geräte näher beschrieben. Es zeigt:

Fig. 1 ein Gerät mit einer innen hohl ausgebildeten in einen Stahlmantel integrierten Bodenrakete in einer Seitenansicht im Schnitt,

Fig. 2 eine weitere Ausbildung eines Geräts mit mehreren in einen Stahlmantel integrierten Bodenraketen in einer Seitenansicht im Schnitt,

Fig. 3 eine Queransicht auf das Gerät nach Fig. 1 und 2 im Schnitt A-A im Bereich der alten Leitung,

Fig. 4 eine Queransicht auf das Gerät nach Fig. 1 und 2 im Bereich des Leitkörpers im Schnitt B-B,

Fig. 5 das Gerät nach Fig. 1 und 2 in einer Queransicht im Schnitt CC im Bereich des als Überläufer ausgebildeten vorderen Abschnitts des Montagerohrs,

Fig. 6 das Gerät nach Fig. 1 und 2 in einer Queransicht im Schnitt D-D im Bereich der Spaltkeile,

Fig. 7 das Gerät nach Fig. 1 in einer Queransicht im Schnitt E-E im Bereich der hohl ausgebildeten Bodenrakete,

Fig. 8 das Gerät nach Fig. 2 in einer Queransicht im Schnitt F-F im Bereich mehrerer mit dem Montagerohr verbundener Bodenraketen.

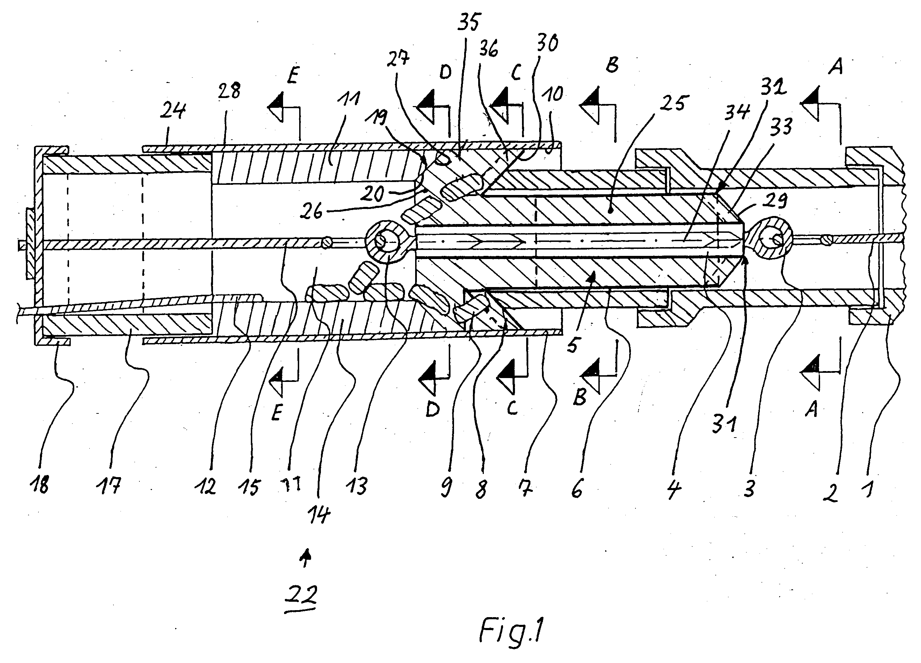

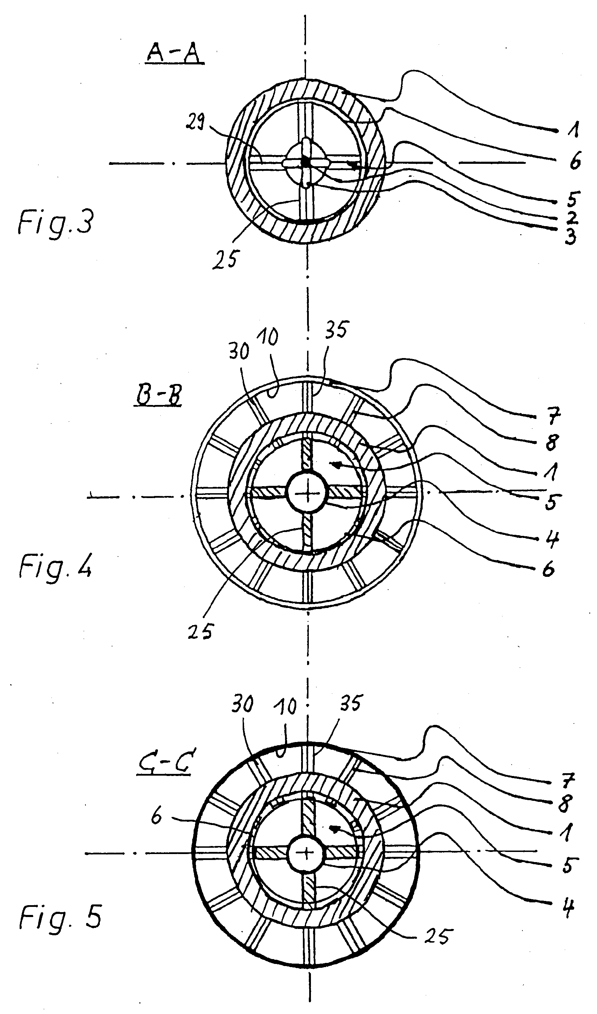

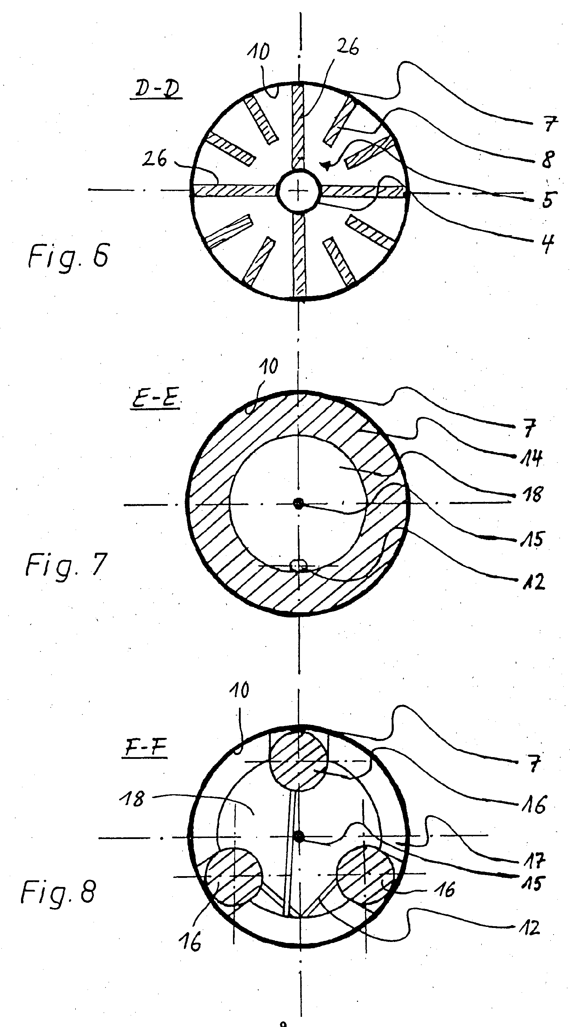

Das Gerät 22 besteht aus einem Montagerohr 7, an deren Innenwand 10 im in Vorschubrichtung vorderen Bereich nach innen gerichtete geneigte Spaltkeile 8 angeordnet sind (Fig. 1). An der Innenwand 10 ist ferner eine als Ringzylinder 11 und damit als Hohlkörper ausgebildete Bodenrakete 14 vorgesehen (Fig. 7). Der in Vorschubrichtung des Geräts 22 vordere Abschnitt 19 des Ringzylinders 11 weist eine abgeschrägte Fläche 20 auf. Die abgeschrägte Fläche 20 dient als Leitfläche zur Führung von abgebrochenen Rohrbruchstücken 9 eines Rohres 1. Die Stege 26 dienen zur Halterung des Leitkörpers 5 und sind mit dem Montagerohr 7 verbunden. Der Leitkörper 5 besteht aus einem inneren Leitkörperrohr 4 und einem äußeren Leitkörperrohr 6. Die Stege 26 sind mit dem äußeren Leitkörperrohr 6 und dem inneren Leitkörperrohr 4 verbunden. Im Bereich des äußeren Leitkörperrohrs 6 ist an jedem Steg 26 ein weiterer radialer Steg 25 angeformt, der bis zum vorderen Endabschnitt 31 des inneren Leitkörperrohrs 4 geführt ist und sich radial zwischen den Leitkörperrohren 4, 6 erstreckt (Fig. 4). Der vordere Endabschnitt 32 des äußeren Leitkörperrohrs 6 ist gegenüber dem vorderen Endabschnitt 31 des inneren Leitkörperrohrs 4 zurückversetzt. Hierdurch sind die vorderen Endabschnitte 33 der radialen Stege 25 schiefwinklig zur Leitkörperlängsachse 34 ausgerichtet. Diese Endabschnitte 33 sind als Schneiden 29 ausgebildet (Fig. 3).

Die radialen Endabschnitte 35 der radialen Stege 26 sind in Vorschubrichtung des Geräts 22 vorgeneigt ausgebildet und weisen an ihren vorderen Endabschnitten 36 jeweils eine Schneide 30 auf. Diese Schneiden 30 an den Endabschnitten 36 nehmen die Funktion von Spaltkeilen wahr. An der den Schneiden 30 gegenüberliegenden Rückseite der radialen Endabschnitte 35 der Stege 26 sind Winkelabschnitte 27 ausgebildet, in die jeweils ein Abschnitt der abgeschrägten Fläche der als Ringzylinder 11 ausgebildeten Bodenrakete 14 eingreift. Zwischen den radialen Endabschnitten 35 der Stege 26 sind jeweils zwei der bereits oben erwähnten Spaltkeile 8 angeordnet (Fig. 5 und 6). Diese können ebenfalls Winkelabschnitte 27 aufweisen, in die die Fläche 20 der Bodenrakete 14 eingreift. Hierdurch erfolgt eine direkte Stoßübertragung von der Bodenrakete 14 auch auf die Spaltkeile 8, an denen Schneiden 30 wie an den Endabschnitten 36 ausgebildet sind.

An dem hinteren Abschnitt 24 der Bodenrakete 14 liegt ein Rohr 17 der neu zu verlegenden Rohrleitung an. Dieses Rohr 17 ist mittels eines Zugtellers 18 an die Bodenrakete 14 gepreßt. Der Zugteller 18 ist mittels eines Seils mit einer Seilbefestigung 13 verbunden, die an dem inneren Leitkörperrohr 4 des Leitkörpers 5 ausgebildet ist. Am anderen Endabschnitt des inneren Leitkörperrohrs 4 befindet sich eine Zugseilbefestigung 3, die mit einem Zugseil 2 verbunden ist. Mittels des Zugseils 2 wird der Leitkörper 5 und damit auch die Bodenrakete 14 so vorgezogen, daß die Spaltkeile 8 und die Schneiden 30 der Endabschnitte 36 der Stege 26 an dem Endabschnitt eines zu zerstörenden alten Rohrs 1 zur Anlage kommen und den Rohrmantel zerbrechen.

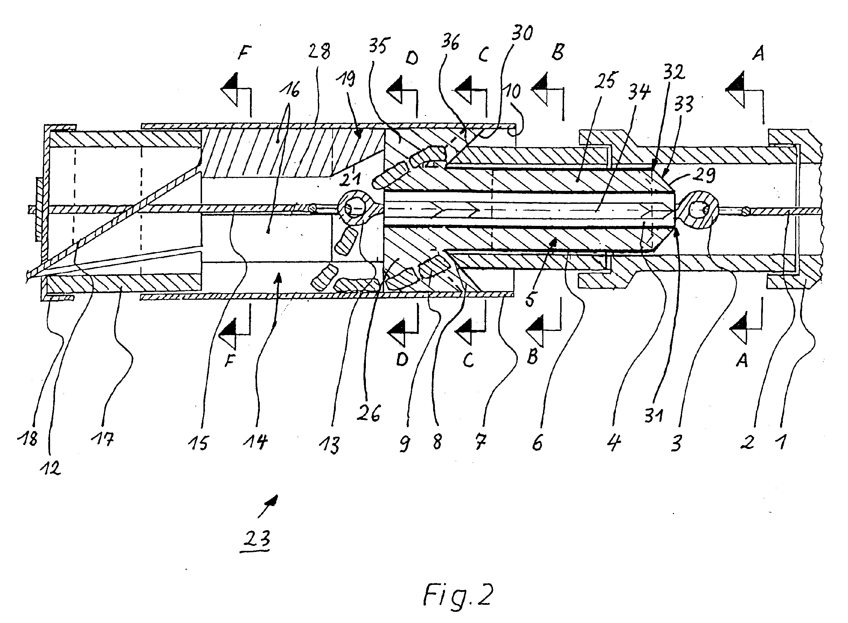

Bei dem in Fig. 2 dargestellten Gerät 23 sind über den Umfang der Innenwand 10 des Montagerohrs 7 verteilt als Zylinder 16 ausgebildete Bodenraketen 14 vorgesehen (Fig. 8). Der weitere Aufbau des Geräts 23 entspricht dem des Geräts 22. Ebenso sind die Funktionen der Geräte 22, 23 gleich. An den in Vorschubrichtung vorderen Abschnitten 19 der Zylinder 16 sind abgeschrägte Flächen 21 ausgebildet, die ebenfalls als Leitflächen zur Führung von abgebrochenen Rohrbruchstücken 9 dienen. Ferner liegen die vorderen Abschnitte 19 der Zylinder 16 an den Rückseiten von radialen Endabschnitten 35 von radialen Stegen 26 oder an Rückseiten von Spaltkeilen 8 an.

Es ist möglich, die Spaltkeile 9 zusätzlich mit Preßluft dynamisch oder mittels mindestens eines Hydraulikstempels statisch vor- und zurückzubewegen. Hierdurch wird die Brechfähigkeit der Spaltkeile 8 erhöht. Zur Durchführung der dynamischen oder statischen Vor- und Zurückbewegung der Spaltkeile 8 können an den Bodenraketen mit Druckluft oder Hydraulikfluid beaufschlagbare Stempel ausgebildet sein. Die Druckluft wird über eine Luftzuführung 12 dem Ringzylinder 11 bzw. den Zylindern 16 zugeführt.

In dem Ringzylinder 11 bzw. den Zylindern 16 sind in bekannter Weise ventilgesteuerte Schlagkolben vorgesehen, mit denen durch Schlageinwirkung die Spaltkeile 8 direkt und über die radialen Stege 26 sowie das Montagerohr 7 stoßartig beaufschlagt werden. Die Betätigung der Schlagkolben erfolgt ventilgesteuert. Es ist möglich, an den freien Endabschnitten der Schlagkolben Spaltkeile vorzusehen. Bei dieser Ausbildung ist es von Vorteil, wenn auf die Außenwand 28 des Montagerohrs 7 ein Sägezahnprofil ausgebildet ist. Hierdurch wird verhindert, daß das Montagerohr 7 sich bei einer Betätigung der Schlagkolben entgegengesetzt zur Vorschubrichtung des Gerätes 22, 23 verschiebt.

Es ist auch möglich, der Bodenrakete 14 des Geräts 22 bzw. den Bodenraketen 14 des Geräts 23 in dem Montagerohr 7 eine Aufnahmeeinrichtung für Rohrbruchstücke 9 zuzuordnen. Diese Aufnahmeeinrichtung kann mit einer Rohrbruchstückfördereinrichtung verbunden sein, die die Rohrbruchstücke 9 durch den Zugteller 18 abführt.

## Patentansprüche

1. Gerät für das Zerstören von Rohrleitungen (1) nach innen, insbesondere für erdverlegte Ver- und Entsorgungsleitungen beliebiger Materialien und Abmessungen, wobei nach innen gerichtete Spaltkeile (8) durch Kraftausübung perifer die Rohre (1) der alten Rohrleitungen zerstören, in deren unzerstörten Teil ein Leitkörper (5) in Überlappung mit einem das zu zerstörende Rohr (1) übergreifenden Montagerohr (7) vorauseilt, dadurch gekennzeichnet, daß das Gerät (22, 23) mindestens eine Bodenrakete (14, 16) aufweist, die an der Innenwand (10) des Montagerohrs (7) angeordnet ist, in deren in Vorschubrichtung vorderen Bereich an der Innenwand (10) des Montagerohrs (7) die Spaltkeile (8) nach innen gerichtet ausgebildet sind und der Leitkörper (5) befestigt ist.

2. Gerät nach Anspruch 1, dadurch gekennzeichnet, daß die Bodenrakete (14) hohlkörperartig als Ringzylinder (11) ausgebildet ist, der an der Innenwand (10) des Montagerohrs (7) befestigt ist.

3. Gerät nach Anspruch 1, dadurch gekennzeichnet, daß die Bodenrakete (14) aus einem oder mehreren Zylindern (16) besteht, die im Abstand voneinander an der Innenwand (10) des Mantelrohrs (7) angeordnet sind.

4. Gerät nach Anspruch 3, dadurch gekennzeichnet, daß die Zylinder (16) in einer gemeinsamen Querschnittsebene an der Innenwand (10) des Mantelrohrs (7) angeordnet sind.

5. Gerät nach Anspruch 1 bis 4, dadurch gekennzeichnet, daß der in Vorschubrichtung vordere Abschnitt (19) des Ringzylinders (11) und die in Vorschubrichtung vorderen Abschnitte (19) der Zylinder (16) eine abgeschrägte Fläche (20, 21) als Leitflächen für Rohrbruchstücke (9) aufweisen.

6. Gerät nach einem der Ansprüche 1 bis 5, dadurch gekennzeichnet, daß der Leitkörper (5) aus einem inneren Leitkörperrohr (4) und einem äußeren Leitkörperrohr (6) besteht, die mittels radial zur Leitkörperlängsachse (34) angeordneter Stege (25) miteinander und mittels an den Stegen (25) angeformter radialer Stege (26) mit dem Montagerohr (7) verbunden sind, wobei die in Vorschubrichtung vorderen Endabschnitte (36) der radialen Endabschnitte (35) der Stege (26) spaltkeilartig ausgebildet sind.

7. Gerät nach Anspruch 1 bis 6, dadurch gekennzeichnet, daß die in Vorschubrichtung des Geräts (22, 23) vorderen Endabschnitte (36, 33) der radialen Endabschnitte (35) der Stege (26) und der Spaltkeile (8) sowie die vorderen Endabschnitte (33) der radialen Stege (25) als Schneiden (30, 29) ausgebildet sind.

8. Gerät nach einem der Ansprüche 1 bis 7, dadurch gekennzeichnet, daß die Spaltkeile (8) mittels Druckluft dynamisch oder mittels Hydraulikstempeln statisch vor- und zurückbewegbar sind.

9. Gerät nach Anspruch 8, dadurch gekennzeichnet, daß an den Bodenraketen (14) mit Druckluft oder Hydraulikfluid beaufschlagbare Stempel ausgebildet sind, die stoßartig auf die radialen Stege (26) und die Spaltkeile (8) einwirkend steuerbar sind oder an deren freien Endabschnitten Spaltkeile (8) angeordnet sind.

10. Gerät nach einem der Ansprüche 1 bis 9, dadurch gekennzeichnet, daß in dem Montagerohr (7) im Bereich der Bodenrakete (14) eine Aufnahmeeinrichtung für Rohrbruchstücke (9) angeordnet ist, die mit einer Rohrbruchstückfördereinrichtung verbunden ist.

## Claims

1. Device for inwardly destroying pipelines (1), in particular buried supply and disposal pipelines of any materials and dimensions, wherein the pipes (1) of the old pipelines are destroyed as a result of the peripheral force of inwardly directed splitting wedges (8), with a guiding body advancing together with a mounting pipe (7) overlapping the pipe (1) to be destroyed in the undestroyed portion of said old pipelines, characterized in that the device (22, 23) has at least one ground rocket (14) arranged on the inner wall (10) of the mounting pipe (7), while in the section of said ground rocket, which is foremost relative to the feeding direction, the splitting wedges (8) are fastened to the guiding body (5) inwardly directed at the inner wall (10) of the mounting pipe (7).

2. Device according to Claim 1, characterized in that the ground rocket (14) is shaped like a hollow block in the form of a ring cylinder (11) fastened to the inner wall (10) of the mounting pipe (7).

3. Device according to Claim 1, characterized in that the ground rocket (14) consists of one or several cylinders (16) spaced along the inner wall (10) of the casing pipe (7).

4. Device according to Claim 3, characterized in that the cylinders (16) are arranged in a common cross-sectional plane at the inner wall (10) of the casing pipe (7).

5. Device according to Claims 1 to 4, characterized in that the section (19) of the ring cylinder (11), which is foremost relative to the feeding direction, and the sections (19) of the cylinders (16), which are foremost relative to the feeding direction, have a bevelled surface (20, 21) acting as guiding surfaces for pipe fractions (9).

6. Device according to any one of Claims 1 to 9, characterized in that the guiding body (5) consists of an internal guiding body pipe (4) and an exterior guiding body pipe (6), which are connected to each other by means of webs (25) arranged radially relative to the longitudinal axis (34) of the guiding body and to the mounting pipe (7) by means of radial webs (26) moulded on to the webs (25), the end sections (36) of the radial end sections (35) of the webs (26), which are foremost relative to the feeding direction, being shaped like a splitting wedge.

7. Device according to Claims 1 to 6, characterized in that the end sections (36, 33) of the radial end sections (35) of the webs (25) and of the splitting wedges (8), which are foremost relative to the feeding direction of the device (22, 23), are formed as cutters (30, 29).

8. Device according to any one of Claims 1 to 7, characterized in that the splitting wedges (8) can be moved forwards and backwards dynamically by means of pressurized air or statically by means of hydraulic punches.

9. Device according to Claim 8, characterized in that punches are arranged at the ground rockets (14), onto which pressurized air or hydraulic fluid can be applied, said punches being either controllable such that they impinge onto the radial webs (26) und the splitting wedges (8) or having arranged splitting wedges (8) at their free end sections.

10. Device according to any one of Claims 1 to 9, characterized in that means for receiving pipe fractions (9) are arranged in the mounting pipe (7) in the area of the ground rocket (14), said receiving means being connected to a pipe fraction conveyor.

**Revendications**

1. Appareil pour la destruction de canalisations vers l'intérieur, en particulier pour des canalisations d'alimentation et d'évacuation posées dans le sol, en matériaux divers et de dimensions diverses, étant entendu que des coins à refendre (8), en exerçant une force sur la périphérie, démolissent les vieilles canalisations, et que, dans leur partie détruite, on fait précéder un corps de guidage (5) se recouvrant avec un tube d'assemblage (7) chevauchant le tuyau à démolir, caractérisé en ce que l'appareil (22, 23) présente au moins une fusée de sol (14) qui est disposée sur la paroi interne (10) du tube d'assemblage (7), dans la zone avant duquel, dans la direction de l'avancement, sur la paroi interne (10) du tube d'assemblage (7) sont installés les coins à refendre (8), dirigés vers l'intérieur, et est fixé le corps de guidage (5).

2. Appareil suivant la revendication 1, caractérisé en ce que la fusée de sol (14) est réalisée, avec un corps creux, sous la forme d'un anneau cylindrique (11) qui est fixé à la paroi intérieure (10) du tube d'assemblage (7).

3. Appareil suivant la revendication 1, caractérisé en ce que les fusées de sol (14) sont constituées d'un ou de plusieurs cylindres (16), qui sont disposés sur la paroi intérieure (10) du tube d'assemblage (7), à une certaine distance les uns des autres.

4. Appareil suivant la revendication 3, caractérisé en ce que les cylindres (16) sont disposés sur la paroi intérieure (10) du tube d'assemblage (7), dans un plan transversal commun.

5. Appareil suivant les revendications 1 à 4, caractérisé en ce que la partie avant (19), dans la direction de l'avancement, de l'anneau cylindriquee (11) et la partie avant (19), dans la direction de l'avancement, des cylindres (16) présentent une surface inclinée (20, 21) comme surface guide pour les morceaux de débris cassés de tuyau.

6. Appareil suivant l'une quelconque des revendications 1 à 5, caractérisé en ce que le corps de guidage (5) est constitué d'un tube intérieur (4) de corps de guidage et d'un tube extérieur (6) de corps de guidage, qui sont reliés entre eux au moyen d'entretoises (25), et sont reliés au tube d'assemblage (7) au moyen d'entretoises (25) ajustées sur les entretoises (25), étant entendu que les parties d'extrémité (36) des extrémités radiales (35) des entretoises (26) sont réalisées sous la forme de coins à refendre (8).

7. Appareil suivant les revendications 1 à 6, caractérisé en ce que la partie d'extrémité avant (36, 37), dans la direction de l'avancement de l'appareil (22, 23), de la partie d'extrémité radiale (35) des entretoises (26) et des coins à refendre (8), ainsi que les parties d'extrémité avant des entretoises radiales (25) sont réalisées de façon à former des taillants.

8. Appareil suivant l'une quelconque des revendications 1 à 7, caractérisé en ce que les coins à refendre (8) peuvent être mis en mouvement en avant et en arrière dynamiquement au moyen d'air comprimé et statiquement au moyen de poinçons hydrauliques.

9. Appareil suivant la revendication 8, caractérisé en ce que, sur les fusées de sol (14), sont réalisés des poinçons, alimentés en air comprimé ou en fluide hydraulique, que l'on peut commander de façon à ce qu'ils agissent par chocs sur les entretoises radiales (26) et sur les coins à refendre (8), ou que des coins à refendre (8) sont disposés à leurs extrémités libres.

10. Appareil suivant l'une quelconque des revendications 1 à 9, caractérisé en ce que, dans le tube d'assemblage (7), dans la zone de la fusée de sol (14), est installé un dispositif de réception pour les débris cassés de tuyau (9), dispositif qui est raccordé à une installation d'évacuation des débris de tuyau.

Fig.1

Fig.2

EP 0 368 079 B1

A-A

Fig.3

B-B

Fig.4

C-C

Fig. 5

8

D-D

Fig. 6

E-E

Fig. 7

F-F

Fig. 8